# FASCICULE DE BREVET EUROPEEN

(11) **EP 3 556 616 B1**
(45) Date de publication et mention de la délivrance du brevet: **03.11.2021**
(21) Numéro de dépôt: 19164240.4
(22) Date de dépôt: 21.03.2019
(51) Int. Cl.: B60S 1/38

(54) **DEFLECTEUR D'AIR DESTINE A UN BALAI D'ESSUYAGE**
LUFTLEITBLECH FÜR EINEN SCHEIBENWISCHER
AIR DEFLECTOR INTENDED FOR A WIPER BLADE

(30) Priorité: 19.04.2018 FR 1853437
(43) Date de publication de la demande: 23.10.2019
(73) Titulaire: Valeo Systèmes d'Essuyage, 78322 Le Mesnil Saint Denis (FR)
(72) Inventeur: CAILLOT, Gérald, 78322 LE MESNIL SAINT DENIS (FR); JARASSON, Jean-Michel, 78322 LE MESNIL SAINT DENIS (FR); IZABEL, Vincent, 78322 LE MESNIL SAINT DENIS (FR); BILLOT, Philippe, 78322 LE MESNIL SAINT DENIS (FR)
(74) Mandataire: Valeo Visibility

(56) Documents cités:
- DE-A1-102015 012 947
- DE-A1-102015 211 044
- FR-A1- 2 846 615

## Description

La présente invention concerne le domaine de l'essuyage, et plus particulièrement le domaine des systèmes d'essuyage dédiés aux véhicules automobiles.

Les véhicules automobiles sont couramment équipés d'un système d'essuyage comprenant au moins un balai d'essuyage d'une surface vitrée, telle que par exemple un pare-brise.

Le balai d'essuyage est entraîné, via un bras, par moteur d'entraînement entre une position initiale et une position extrême. La position initiale correspond à une position de repos du balai d'essuyage dans laquelle ce balai d'essuyage est soit dans une position sensiblement horizontale sur le pare-brise, c'est-à-dire le long du capot, soit en position sensiblement verticale par rapport au pare-brise c'est-à-dire le long d'un montant latéral ; et la position extrême correspond quant à elle à une position active du balai d'essuyage dans laquelle le balai d'essuyage est soit en position sensiblement verticale sur le pare-brise, le long d'un montant porteur de ce pare-brise, soit en position sensiblement horizontale sur le pare-brise. Lors de son mouvement entre cette position initiale et cette position extrême, le balai d'essuyage est configuré pour évacuer l'eau et/ou des salissures présentes sur le pare-brise et qui peuvent gêner la visibilité du conducteur.

Lorsque le système d'essuyage est mis en fonctionnement, celui-ci alterne entre une phase ascendante au cours de laquelle le balai d'essuyage passe de sa position initiale à sa position extrême et une phase descendante au cours de laquelle le balai d'essuyage passe de sa position extrême à sa position initiale.

Les systèmes d'essuyage actuels présentent toutefois un défaut qui intervient lors de ces phases descendantes, notamment à vitesses intermédiaires. En effet, lors de ces phases descendantes, un phénomène d'aspiration de l'eau présente sur le pare-brise, ou d'un liquide de nettoyage projeté pour nettoyer ce pare-brise, peut se former. Ce phénomène d'aspiration est d'autant plus présent qu'un tel liquide - qu'il s'agisse de l'eau ou du liquide de nettoyage - a tendance à s'accumuler entre le balai d'essuyage, lorsqu'il est dans sa position extrême, et le montant délimitant partiellement le pare-brise. Ce phénomène d'aspiration tend à ramener le liquide dans le champ de vision du conducteur, ce qui peut réduire la visibilité de ce dernier et finalement devenir un phénomène dangereux.

Le document FR2846615A1 décrit un déflecteur d'air selon le préambule de la revendication 1.

La présente invention a pour but de pallier cet inconvénient, en proposant un balai d'essuyage équipé d'un déflecteur d'air capable de limiter, voire d'annihiler ce phénomène d'aspiration.

Un objet de la présente invention concerne ainsi un déflecteur d'air pour un balai d'essuyage configuré pour essuyer une surface vitrée d'un véhicule, le déflecteur d'air s'étendant majoritairement selon un axe longitudinal et comprenant au moins une première partie qui émerge d'une deuxième partie, la première partie comprenant une arête libre, le déflecteur d'air comprenant au moins un canal configuré pour être emprunté par au moins un flux d'air secondaire issu d'un flux d'air principal circulant le long de la deuxième partie, le déflecteur d'air comprenant au moins une première ouverture par laquelle le flux d'air secondaire est apte à rejoindre le canal et le déflecteur d'air comprenant au moins une deuxième ouverture par laquelle le flux d'air secondaire est apte à quitter le canal, une première distance mesurée entre un point de l'arête libre et la première ouverture étant inférieure à une deuxième distance mesurée entre le même point de l'arête libre et la deuxième ouverture, la première distance et la deuxième distance étant mesurées dans un même plan transversal à l'axe longitudinal. Selon l'invention, la première ouverture est ménagée dans la première partie du déflecteur d'air et la deuxième ouverture est ménagée dans la deuxième partie du déflecteur d'air, et la première ouverture et la deuxième ouverture du canal sont décalées l'une par rapport à l'autre le long de l'axe longitudinal.

Par exemple, ces distances peuvent être mesurées entre le même point de l'arête libre et, respectivement, un centre de la première ouverture et un centre de la deuxième ouverture.

On comprend que le déflecteur d'air selon l'invention est destiné à être intégré sur le balai d'essuyage, lui-même étant configuré pour évacuer de l'eau et/ou des salissures, par exemple grâce à un liquide lave-glace, présentes sur un pare-brise d'un véhicule automobile. Un tel pare-brise est délimité par des montants du véhicule. On entend par « la première partie émerge de la deuxième partie » le fait que cette première partie présente une portion commune avec la deuxième partie et que cette première partie s'étend en éloignement de la deuxième partie à partir de cette portion commune. Par exemple, cette première partie et cette deuxième partie forment un ensemble monobloc, c'est-à-dire un ensemble qui ne peut être séparé sans occasionner la détérioration de l'une ou l'autre de ces parties. Par exemple le déflecteur d'air selon l'invention peut être obtenu par extrusion. Alternativement, le déflecteur d'air peut être obtenu par injection ou par moulage.

La deuxième partie du déflecteur d'air comprend au moins un moyen d'accrochage de ce déflecteur d'air sur le balai d'essuyage, et plus précisément sur un support de ce balai d'essuyage. La deuxième partie est ainsi une base du déflecteur d'air. La première partie est quant à elle au moins en partie configurée pour transformer une pression appliquée par le flux d'air principal circulant sur le pare-brise en une force d'appui permettant de plaquer le balai d'essuyage comprenant le déflecteur d'air selon l'invention sur le pare-brise à essuyer. Cette première partie s'étend selon une direction transversale à l'axe longitudinal et à une droite qui passe par la première ouverture et par la deuxième ouverture. Cette première partie est ainsi une aile qui, vue en coupe transversale, se dresse depuis la deuxième partie.

On comprend de ce qui précède que, lorsque le déflecteur d'air selon l'invention est positionné sur le balai d'essuyage, la première ouverture est ménagée verticalement au-dessus de la deuxième ouverture. Grâce à la première ouverture, au canal et à la deuxième ouverture, on comprend que le flux d'air secondaire issu du flux d'air principal circulant sur le pare-brise est ainsi apte à traverser le déflecteur d'air selon l'invention. Ce flux d'air secondaire qui traverse ainsi le déflecteur d'air vient diminuer, voire inverser les conditions aérodynamiques autrement générées en aval du déflecteur d'air par rapport à un sens de circulation du flux d'air le long de ce déflecteur d'air et qui conduisent d'une part à l'accumulation d'eau et/ou de liquide lave-glace entre le balai d'essuyage dans sa position extrême et l'un des montants délimitant le pare-brise et d'autre part à la ré-aspiration par le balai d'essuyage de ces liquides, ce qui tend à les ramener dans le champ de vision d'un conducteur du véhicule. Ainsi, la visibilité de ce conducteur est optimale à tout moment au cours de l'essuyage.

Selon une caractéristique de la présente invention, au moins une portion du canal s'étend parallèlement à l'axe longitudinal. Par exemple, la portion du canal qui s'étend parallèlement à l'axe longitudinal est ménagée dans la première partie du déflecteur d'air. Alternativement ou de manière complémentaire, la portion du canal qui s'étend parallèlement à l'axe longitudinal est ménagée dans la deuxième partie du déflecteur d'air.

Selon l'invention, la première ouverture et la deuxième ouverture du canal sont décalées l'une par rapport à l'autre le long de l'axe longitudinal.

En d'autres termes, ces ouvertures ne se font pas face. Le phénomène d'aspiration évoqué ci-dessus peut avoir lieu en différentes positions longitudinales en fonction du type de véhicule sur lequel est intégré le déflecteur d'air selon l'invention. Le décalage de la première ouverture par rapport à la deuxième ouverture permet alors avantageusement d'adapter le déflecteur d'air selon l'invention à différents types de véhicule, en gardant la même efficacité quant à la limitation de ce phénomène d'aspiration.

Selon une configuration particulière de la présente invention, la première ouverture présente une section supérieure à une section de la deuxième ouverture. On entend par « section de la première ouverture » une surface de cette première ouverture et par « section de la deuxième ouverture » une surface de cette deuxième ouverture. Avantageusement, on comprend que cette configuration particulière permet d'accélérer le flux d'air secondaire au niveau de la deuxième ouverture, c'est-à-dire au moment où ce flux d'air secondaire quitte le canal ménagé dans le déflecteur d'air. Ce flux d'air secondaire permet ainsi de déplacer une quantité d'eau et/ou de liquide lave-glace plus importante et ainsi de réduire encore le phénomène d'aspiration évoqué ci-dessus.

Selon une autre configuration de la présente invention, la section de la première ouverture est inférieure à la section de la deuxième ouverture. Une telle configuration privilégie le traitement d'une plus grande longueur du pare-brise.

Selon une caractéristique de l'invention, le canal peut comprendre une pluralité de deuxièmes ouvertures. Selon cette caractéristique, chaque deuxième ouverture est alors configurée pour permettre au flux d'air secondaire de quitter le canal. En d'autres termes, le flux d'air secondaire est ainsi apte à quitter le canal par l'une de ces deuxièmes ouvertures. Avantageusement, ces deuxièmes ouvertures sont réparties sur toute la dimension longitudinale du déflecteur d'air de sorte que le phénomène d'aspiration est réduit sur une surface du pare-brise plus importante. Le canal est ainsi commun à une pluralité de deuxièmes ouvertures.

Selon une autre caractéristique de la présente invention, le canal peut comprendre une pluralité de premières ouvertures. Selon cette caractéristique, chaque première ouverture est alors configurée pour permettre au flux d'air secondaire d'entrer dans le canal. En d'autres termes, le flux d'air secondaire est ainsi apte à rejoindre le canal par l'une de ces premières ouvertures. Le canal est ainsi commun à une pluralité de premières ouvertures.

Ainsi, selon l'une et/ou l'autre de ces deux caractéristiques, le canal peut comprendre autant de premières ouvertures que de deuxièmes ouvertures. Alternativement, le canal peut comprend plus de premières ouvertures que de deuxièmes ouvertures. Selon encore une autre alternative, le canal comprend plus de deuxièmes ouvertures que de premières ouvertures.

Selon un aspect de la présente invention, le déflecteur d'air peut comprendre un volet configuré pour obturer au moins une première ouverture. Plus précisément, ce volet comprend ainsi une portion pleine configurée pour obturer la première ouverture.

Avantageusement, ce volet est configuré pour obturer toutes les premières ouvertures ménagées dans le déflecteur d'air. Avantageusement, le volet est réalisé de sorte qu'il n'obture la/les première(s) ouverture(s) que lorsque le véhicule sur lequel est intégré un balai d'essuyage comprenant un tel déflecteur d'air roule à une vitesse élevée, c'est-à-dire une vitesse supérieure par exemple à 120km/h. En effet, au-delà de cette vitesse, le phénomène d'aspiration a tendance à disparaitre et il convient alors de maximiser la fonction première de ce déflecteur d'air, à savoir transformer la pression appliquée par le flux d'air principal en une force d'appui qui maintient le balai d'essuyage contre le pare-brise.

Avantageusement, un trou traversant est ménagé dans le volet, ce trou étant configuré pour autoriser le passage du flux d'air principal.

La présente invention concerne également un balai d'essuyage pour véhicule automobile comprenant au moins une lame d'essuyage destinée à venir en appui sur une surface vitrée, au moins un organe de flexion configuré pour générer une courbure du balai d'essuyage, au moins un déflecteur d'air selon l'invention, et au moins un support porteur de l'organe de flexion, de la lame d'essuyage et du déflecteur d'air.

Selon une caractéristique de l'invention, le déflecteur d'air peut comprendre au moins deux crochets configurés pour enserrer le support. Plus exactement, ces crochets sont ménagés sur la deuxième partie de ce déflecteur d'air. Alternativement, le déflecteur d'air peut être issu de matière avec la lame d'essuyage, un ensemble formé par ce déflecteur d'air et la lame d'essuyage comprenant alors au moins deux encoches configurées pour recevoir, chacune, un organe de flexion du balai d'essuyage.

D'autres détails, caractéristiques et avantages ressortiront plus clairement à la lecture de la description détaillée donnée ci-après à titre indicatif en relation avec les différents modes de réalisation illustrés sur les figures suivantes :
- la figure 1 est une vue d'ensemble d'un système d'essuyage comprenant un balai d'essuyage équipé d'un déflecteur d'air selon la présente invention ;
- la figure 2 représente de façon schématique le système d'essuyage illustré sur la figure 1 en situation d'essuyage d'un pare-brise d'un véhicule ;
- la figure 3 représente le balai d'essuyage illustré sur la figure 1, vu selon une coupe transversale ;
- les figures 4 à 6 sont des représentations du déflecteur d'air selon l'invention, vu en coupe transversale, selon trois variantes d'un premier mode de réalisation de la présente invention ;
- les figures 7 à 10 sont des représentations schématiques du déflecteur d'air selon l'invention, vu en coupe transversale, selon deux variantes d'un deuxième mode de réalisation de la présente invention.

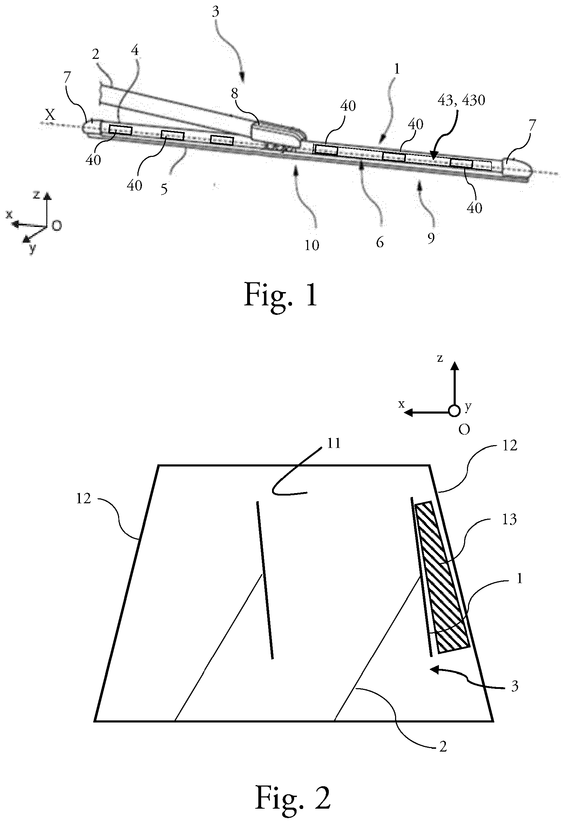

Dans la suite de la description, les dénominations longitudinales, verticales ou horizontales se réfèrent à l'orientation d'un déflecteur d'air intégré à un balai d'essuyage. La direction longitudinale correspond à une direction d'extension longitudinale du déflecteur d'air, cette direction longitudinale étant parallèle à un axe Ox d'un repère orthonormé, par exemple représenté à la figure 1. Une direction horizontale correspond à une direction parallèle à un axe Oy de ce repère orthonormé, l'axe Oy étant perpendiculaire à l'axe Ox. Une direction verticale correspond à une direction parallèle à un axe Oz du repère orthonormé, l'axe Oz étant perpendiculaire à l'axe Ox et à l'axe Oy.

Les coupes transversales mentionnées ci-après sont quant à elles réalisées selon des plans de coupe perpendiculaires à l'axe Ox du repère orthonormé et dans lesquelles s'inscrivent les axes Oy et Oz de ce repère orthonormé.

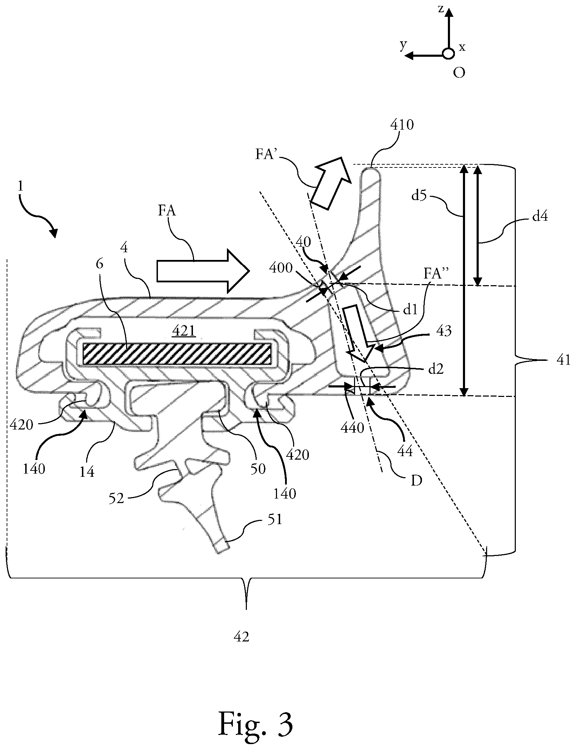

Les figures 3 à 10 décrites ci-après représentent des coupes transversales du déflecteur d'air seul, ou intégré au balai d'essuyage, et réalisées selon différentes variantes d'un premier ou d'un deuxième mode de réalisation de la présente invention.

Sur la figure 1 est représenté un système d'essuyage 3 configuré pour être installé sur un véhicule automobile et permettant d'évacuer une eau et/ou des salissures, par exemple grâce à un liquide lave-glace, présentes sur une surface vitrée, notamment un pare-brise de ce véhicule automobile. Le système d'essuyage 3 comprend un bras d'entraînement 2 apte à effectuer un mouvement de va-et-vient angulaire le long et au-dessus de ce pare-brise.

Le système d'essuyage 3 comprend aussi un balai d'essuyage 1 qui s'étend selon un axe longitudinal X parallèle à l'axe Ox. Le balai d'essuyage 1 comprend au moins un déflecteur d'air 4, une lame d'essuyage 5, au moins un organe de flexion 6, également appelé vertèbre, et deux embouts d'extrémités 7 respectivement agencés à chacune des extrémités longitudinales du balai d'essuyage 1. L'organe de flexion 6 prend la forme d'une bande d'extension longitudinale parallèle à l'axe Ox et qui s'étend majoritairement dans un plan Oxy.

La lame d'essuyage 5 est la pièce du balai d'essuyage 1 en contact direct avec la surface vitrée pour évacuer l'eau et/ou les salissures présentes sur cette dernière. Le déflecteur d'air 4, la lame d'essuyage 5 et l'organe de flexion 6 forment un ensemble semi-rigide 9 qui est porté par un dispositif de connexion 10, interposé entre le bras d'entraînement 2 et l'ensemble semi-rigide 9. Le dispositif de connexion 10 assure une liaison mécanique entre une partie terminale 8 du bras d'entraînement 2 et le balai d'essuyage 1 et permet ainsi de séparer le balai d'essuyage 1 du bras d'entraînement 2, en vue d'un remplacement du balai d'essuyage 1.

Le déflecteur d'air 4 est quant à lui prévu pour transformer une pression appliquée par un flux d'air principal circulant le long de la surface vitrée du véhicule automobile en une force d'appui du balai d'essuyage 1 contre cette surface vitrée. Le déflecteur d'air 4 s'étend principalement parallèlement à l'axe longitudinal X.

Tel que représenté sur la figure 1, le déflecteur d'air 4 selon l'invention comprend au moins une première ouverture 40, avantageusement une pluralité de premières ouvertures 40 configurées pour être traversées par au moins une partie du flux d'air principal circulant le long de la surface vitrée. Dans la suite de la description, cette partie du flux d'air principal destinée à traverser au moins l'une des premières ouvertures 40 ménagées dans le déflecteur d'air 4 est désignée comme « flux d'air secondaire ». Ce déflecteur d'air 4 comprend en outre au moins un canal 43 dans lequel débouchent la/les premières ouvertures 40 et au moins une deuxième ouverture, avantageusement une pluralité de deuxièmes ouvertures, ménagée dans une partie de ce déflecteur d'air 4 non visible sur la figure 1, cette deuxième ouverture étant configurée pour permettre au flux d'air secondaire ayant rejoint le canal 43 par les premières ouvertures 40 de quitter ce canal 43. En d'autres termes, ces premières et deuxièmes ouvertures permettent, avec le canal 43, à ce flux d'air secondaire de traverser de part en part le déflecteur d'air 4. Le canal 43 ménagé dans le déflecteur d'air 4 sera plus amplement décrit ci-après.

Le bras d'entrainement 2 est motorisé et permet de générer un mouvement de va et vient du balai d'essuyage 1. Ce balai d'essuyage 1 se déplace alors entre une position initiale dans laquelle il est dans une position sensiblement horizontale, c'est-à-dire sensiblement parallèle au plan Oxy, et une position extrême dans laquelle il est dans une position sensiblement verticale, c'est-à-dire sensiblement parallèle au plan Oyz. Cette position extrême est par exemple illustrée sur la figure 2 et correspond à une position dans laquelle le balai d'essuyage 1 est aligné avec un montant 12 porteur du pare-brise. Dans la suite de la description, les termes « phase ascendante » se réfèrent à une situation dans laquelle le balai d'essuyage 1 passe de sa position initiale à sa position extrême et les termes « phase descendante » se réfèrent quant à eux à une situation dans laquelle le balai d'essuyage 1 passe de sa position extrême à sa position initiale.

Cette figure 2 illustre ainsi le pare-brise, référencé ici 11, d'un véhicule automobile sur lequel est posé le balai d'essuyage 1 qui vient d'être décrit. Tel qu'illustré, ce pare-brise 11 est délimité par au moins deux montants 12 du véhicule. Lors de la phase ascendante, le balai d'essuyage 1 racle le pare-brise 11 de sorte à amener l'eau et/ou le liquide lave-glace présents sur ce pare-brise 11 vers l'un des montants 12 du véhicule. Cette eau et/ou ce liquide lave-glace ont alors tendance à s'accumuler dans une zone 13 située entre le balai d'essuyage 1 dans sa position extrême et ce montant 12 du véhicule. Lors de la phase descendante du balai d'essuyage 3, un phénomène d'aspiration de ces liquides accumulés par le balai d'essuyage 1 peut se produire, ramenant alors ces liquides dans le champ de vision du conducteur. Tel que cela sera plus amplement détaillée ci-dessous, le flux d'air secondaire configuré pour traverser le déflecteur d'air 4 grâce aux premières et deuxièmes ouvertures, ainsi qu'au canal décrit ci-dessous, est avantageusement configuré pour former un jet d'air qui vient souffler sur ces liquides accumulés de sorte à les évacuer hors du pare-brise 11, et ainsi limiter que ce phénomène d'aspiration ne vienne gêner la visibilité du conducteur. Plus particulièrement, ce flux d'air secondaire qui traverse ainsi le déflecteur d'air 4 vient diminuer, voire inverser des conditions aérodynamiques autrement générées en aval du déflecteur d'air 4 par rapport à un sens de circulation du flux d'air principal le long de ce déflecteur d'air 4 et qui conduisent d'une part à l'accumulation d'eau et/ou de liquide lave-glace dans la zone 13 décrite ci-dessus, et d'autre part à la ré-aspiration par le balai d'essuyage 1 de ces liquides, ce qui tend à ramener ces derniers dans le champ de vision d'un conducteur du véhicule. Ainsi, la visibilité de ce conducteur est optimale à tout moment au cours de l'essuyage.

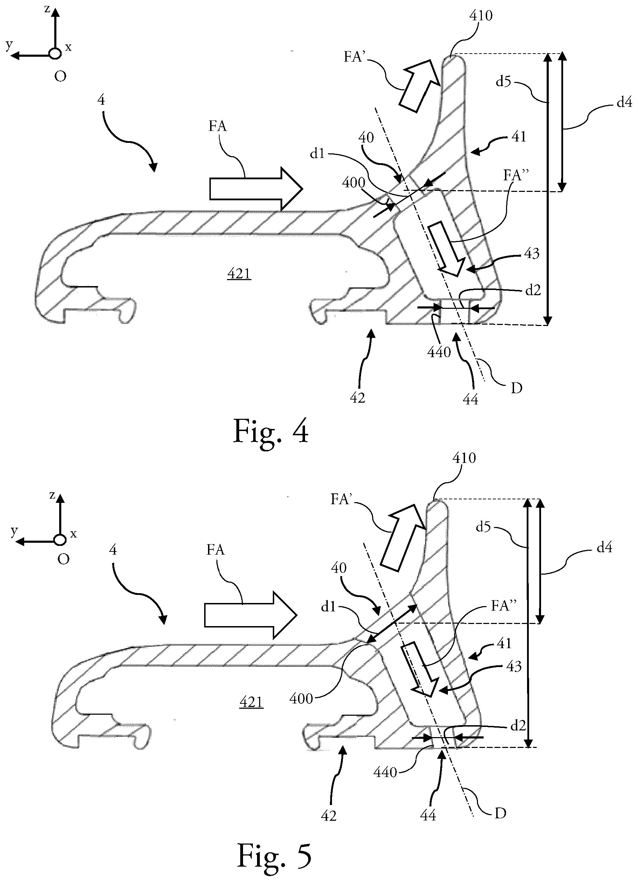

La figure 3 est une vue en coupe transversale du balai d'essuyage 1 précédemment décrit et illustré sur la figure 1, c'est-à-dire une coupe réalisée selon un plan dans lequel s'inscrivent les axes Oy et Oz du repère orthonormé illustré sur les figures. Le déflecteur d'air 4 représenté sur cette figure 3 intègre des caractéristiques communes aux différents modes de réalisation qui vont être décrits ci-après en référence aux figures 4 à 10.

Sur cette figure 3 sont ainsi représentés un support 14 qui porte la lame d'essuyage 5, l'organe de flexion 6 et le déflecteur d'air 4 selon l'invention. Tel que représenté, la lame d'essuyage 5 comprend un talon 50 par laquelle elle est maintenue dans le support 14 et une zone de frottement 51 destinée à venir au contact du pare-brise à essuyer. Afin d'optimiser le balayage de ce pare-brise, la zone de frottement 51 est reliée au talon 50 par une charnière 52 de sorte que cette zone de frottement 51 est mobile par rapport au talon 50.

L'organe de flexion 6 prend la forme d'une bande d'extension longitudinale de section verticale, c'est-à-dire une section vue dans le plan de coupe de la figure 3, sensiblement rectangulaire. Selon l'exemple illustré ici, le balai d'essuyage 3 comprend un unique organe de flexion 6.

Le déflecteur d'air 4 selon la présente invention comprend quant à lui une première partie 41 qui émerge d'une deuxième partie 42. Cette première partie 41 et cette deuxième partie 42 forment un ensemble monobloc, c'est-à-dire un ensemble qui ne peut être séparé sans entrainer la détérioration de la première partie 41 et/ou de la deuxième partie 42. Par exemple, le déflecteur d'air 4 est obtenu par extrusion.

Tel qu'illustré, la première partie 41 s'étend selon une direction transversale à l'axe longitudinal. Selon un exemple illustré ici, cette première partie 41 s'étend plus particulièrement selon une direction sensiblement verticale, c'est-à-dire parallèle à l'axe Oz. Cette première partie 41 comprend une arête libre 410 qui représente le point du déflecteur d'air 4 le plus éloigné du pare-brise du véhicule sur lequel est destiné à être intégré un balai d'essuyage 1 comprenant un tel déflecteur d'air 4. Avantageusement, c'est cette première partie 41 qui permet de transformer la pression appliquée par le flux d'air principal FA circulant sur le pare-brise en une force d'appui configurée pour plaquer le balai d'essuyage 1 sur ce pare-brise.

La deuxième partie 42 comprend quant à elle deux crochets 420 configurés pour assurer le maintien du déflecteur d'air 4 sur le support 14. Tel qu'illustré, ce support 14 comprend ainsi deux portions 140 de formes complémentaires à celles des crochets 420 et destinées à recevoir ces derniers. On remarque également que cette deuxième partie 42 comprend un évidement 421 dans lequel sont logés au moins l'organe de flexion 6 et une partie du support 14 porteuse de cet organe de flexion 6.

Tel que représenté, la première partie 41 émerge de la deuxième partie 42 de sorte que la première partie 41 et la deuxième partie 42 présentent une portion commune depuis laquelle la première partie 41 s'étend en éloignement de la deuxième partie 42. Ainsi, la deuxième partie 42 du déflecteur d'air 4 est une base de ce déflecteur d'air 4 et la première partie 41 forme une aile de ce déflecteur d'air 4 qui, vue en coupe transversale, se dresse depuis la deuxième partie 42.

Le déflecteur d'air 4 comprend en outre le canal 43 configuré pour être emprunté au moins par le flux d'air secondaire FA" issu du flux d'air principal FA. Autrement dit, le flux d'air principal FA qui arrive au niveau de ce canal 43 se divise en un flux d'air primaire FA' dont la pression est transformée en la force d'appui du balai d'essuyage sur le pare-brise et en le flux d'air secondaire FA" configuré pour entrer dans le canal 43.

Selon les exemples décrits et illustrés ici, le canal 43 présente une section verticale, c'est-à-dire vue dans le plan Oyz, sensiblement en forme de quadrilatère. Il est entendu que toute autre forme de la section verticale de ce canal 43 est envisageable sans sortir du contexte de l'invention. Par exemple, ce canal 43 pourrait présenter une section circulaire ou oblongue, régulière ou irrégulière le long du canal 43.

Ce canal 43 comprend au moins une première ouverture 40, tel que par exemple évoqué en référence à la figure 1. Cette première ouverture 40 est configurée pour permettre au flux d'air secondaire FA" de rejoindre le canal 43. Tel que représenté, ce canal 43 comprend également la deuxième ouverture 44 configuré pour permettre au flux d'air secondaire FA" de quitter ce canal 43. On remarque que la première ouverture 40 est ménagée dans la première partie 41 du déflecteur d'air 4 et que la deuxième ouverture 44 est quant à elle ménagée dans la deuxième partie 42 de ce déflecteur d'air 4. Tel qu'illustré, une droite D passant par la première ouverture 40 et par la deuxième ouverture 44 est transversale à l'axe longitudinal. Autrement dit, la première ouverture 40 et la deuxième ouverture 44 sont ménagées dans des côtés opposés de la forme de quadrilatère que prend la section verticale de ce canal 43.

La première ouverture 40 est délimitée par au moins un premier bord 400 formé par une portion de la première partie 41 du déflecteur d'air 4. De façon similaire, la deuxième ouverture 44 est délimitée par au moins un deuxième bord 440 formé par une portion de la deuxième partie 42 du déflecteur d'air 4.

Selon l'invention, la première ouverture 40 est plus proche de l'arête libre 410 de la première partie 41 que la deuxième ouverture 44. En d'autres termes, une première distance d4 mesurée entre un centre de la première ouverture 40 et un point de l'arête libre 410 est inférieure à une deuxième distance d5 mesurée entre un centre de la deuxième ouverture 44 et le même point de l'arête libre 410, la première distance d4 et la deuxième distance d5 étant mesurées dans un même plan transversal à l'axe longitudinal X. On entend par « centre de la première ouverture 40 » un point de cette ouverture située à une distance équivalente de tout point du premier bord 400 qui délimite cette ouverture 40, dans le cas d'une section de première ouverture 40 de forme circulaire. De façon similaire, on entend par « centre de la deuxième ouverture » un point de cette deuxième ouverture située à une distance équivalente de tout point du deuxième bord 440 qui délimite cette deuxième ouverture 44 dans le cas d'une section de deuxième ouverture 44 de forme circulaire. Il est entendu que la première ouverture 40 et la deuxième ouverture 44 pourraient être ménagées dans des côtés adjacents de la forme de quadrilatère que prend la section verticale du canal 43 sans sortir du contexte de l'invention, à condition que la première ouverture soit plus proche de l'arête libre que la deuxième ouverture.

Une section d1 de la première ouverture 40 et une section d2 de la deuxième ouverture 44 sont calculées de sorte que ces ouvertures 40, 44 ne perturbe pas la fonction du déflecteur d'air 4 qui consiste à transformer la pression appliquée par le flux d'air principal FA, et plus particulièrement par le flux d'air primaire FA' issu de ce flux d'air principal FA, en la force d'appui du balai d'essuyage contre ce pare-brise. Par exemple, la section d1 de la première ouverture 40 et la section d2 de la deuxième ouverture 44 sont, respectivement, inférieures à 10 mm. Avantageusement, la première ouverture 40 présente une section d1 égale, ou sensiblement égale, à 2 mm et la deuxième ouverture présente quant à elle une section d2 égale, ou sensiblement égale, à 1 mm.

On remarque également qu'une section transversale du canal 43 est supérieure à la fois à la section d1 de la première ouverture 40 et la section d2 de la deuxième ouverture 44, cette section transversale du canal 43 étant mesurée entre deux bords de la forme de quadrilatère que prend la section verticale de ce canal 43, et selon une droite perpendiculaire à la droite D passant par le centre de la première ouverture 40 et par le centre de la deuxième ouverture 44. Selon une variante non illustrée ici, la section de la première ouverture, la section de la deuxième ouverture et la section transversale du canal telle que définie ci-dessus, présentent des dimensions équivalentes ou sensiblement équivalentes. En d'autres termes, selon cette variante, le canal prend alors une forme rectiligne régulière au moins entre la première ouverture et la deuxième ouverture.

On comprend de ce qui précède que le déflecteur d'air 4 selon l'invention est configuré pour être traverser par le flux d'air secondaire FA". Tel qu'évoqué ci-dessus, ce flux d'air secondaire FA" vient ainsi au moins limiter, les conditions aérodynamiques autrement générées en aval du déflecteur d'air 4 et pousser l'eau et/ou le liquide lave-glace qui se sont accumulés dans la zone 13 définie ci-dessus en référence à la figure 2, située entre le balai d'essuyage dans sa position extrême et le montant du pare-brise. On comprend alors que cette eau et/ou ce liquide lave-glace sont poussés vers le montant du pare-brise, ce qui éloigne ce liquide du balai d'essuyage et réduit ainsi le phénomène d'attraction du balai d'essuyage sur ce liquide. Au final, la visibilité du conducteur est significativement améliorée et le risque de perturbation visuelle est réduit, au moins à vitesses intermédiaires.

Avantageusement, au moins une portion 430 du canal 43 peut s'étendre parallèlement à l'axe longitudinal X. Cette portion 430 est par exemple illustrée sur la figure 1. La première ouverture et la deuxième ouverture sont ménagées en décalage longitudinal l'une par rapport à l'autre. Autrement dit, cette première ouverture et cette deuxième ouverture sont alors ménagées à distance l'une de l'autre, cette distance étant mesurée parallèlement à l'axe Ox. Ce décalage permet avantageusement d'une part de capter le flux d'air secondaire à un endroit approprié, c'est-à-dire en termes d'aérodynamisme et/ou de nuisances acoustiques, et d'autre part, de diriger le flux d'air secondaire qui traverse le déflecteur d'air vers les portions de la zone prédéfinie au niveau desquelles l'accumulation d'eau et/ou de liquide lave-glace est la plus importante. Ces portions peuvent varier d'un véhicule à l'autre et ce décalage permet ainsi avantageusement d'adapter le déflecteur d'air 4 selon l'invention à différents types de véhicule sans que son efficacité ne soit altérée.

Nous allons maintenant décrire plus en détail différentes variantes de deux modes de réalisation de ce déflecteur d'air 4 en référence aux figures 4 à 10.

Les figures 4 à 6 illustrent tout d'abord un premier mode de réalisation du déflecteur d'air 4 selon la présente invention, ces figures illustrant respectivement une première variante, une deuxième variante et une troisième variante de ce premier mode de réalisation. Tel que précédemment évoqué ces figures représentent le déflecteur d'air 4 vu selon une coupe transversale.

Ces différentes variantes du premier mode de réalisation diffèrent les unes des autres notamment par le ratio entre la section d1 de la première ouverture 40 et la section d2 de la deuxième ouverture 44.

Selon la première variante illustrée sur la figure 4, la section d1 de la première ouverture 40 est sensiblement identique à la section d2 de la deuxième ouverture 44. Selon cette première variante, le débit du flux d'air secondaire FA" qui traverse le canal 43 est ainsi constant sur toute une dimension de ce canal 43 mesurée entre le centre de la première ouverture 40 et le centre de la deuxième ouverture 44.

Selon la deuxième variante illustrée sur la figure 5, la section d1 de la première ouverture 40 est supérieure à la section d2 de la deuxième ouverture 44. Plus particulièrement, selon cette deuxième variante, la section d1 de la première ouverture 40 est équivalente, ou sensiblement équivalente, à une largeur de la section verticale du canal 43 mesurée entre deux bords opposés de la forme de quadrilatère que prend cette section verticale du canal 43, ces bords opposés étant distincts des bords dans lesquels sont ménagées la première ouverture 40 et la deuxième ouverture 44. On comprend donc que selon la deuxième variante, le flux d'air secondaire FA" quitte le canal 43 à une vitesse supérieure que la vitesse avec laquelle il a rejoint ce canal 43. De la sorte, l'action visant à pousser l'eau et/ou le liquide lave-glace est plus performante.

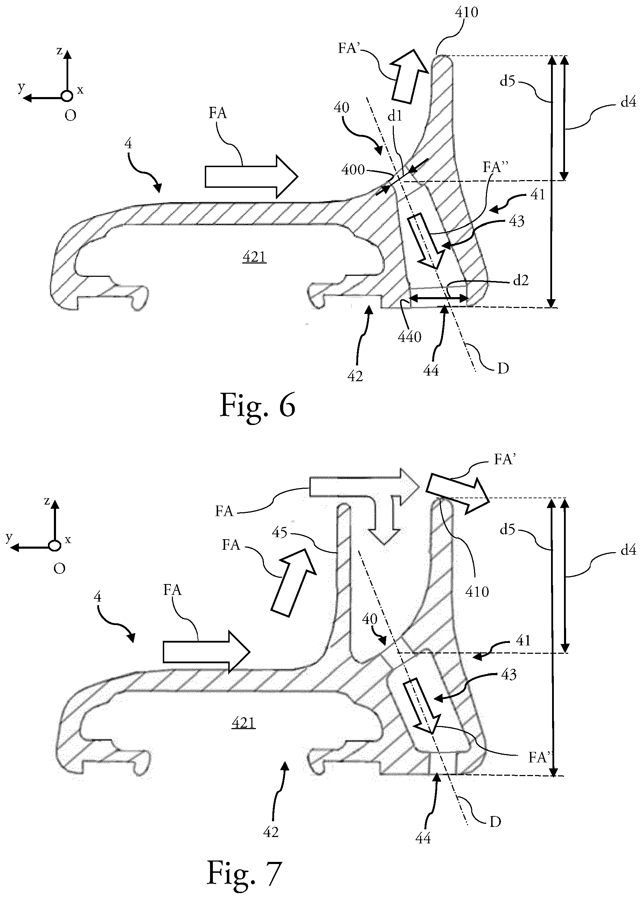

Selon la troisième variante illustrée sur la figure 6, la section d1 de la première ouverture 40 est inférieure à la section d2 de la deuxième ouverture 44. De façon analogue à ce qui vient d'être décrit, on remarque que selon cette troisième variante, la section d2 de la deuxième ouverture 44 est équivalente, ou sensiblement équivalente à la largeur de la section verticale du canal 43.

La modification des sections d1, d2 de ces première et deuxième ouvertures permet avantageusement de modifier le comportement du flux d'air secondaire FA" qui traverse le déflecteur d'air 4, et plus particulièrement de modifier la vitesse à laquelle ce flux d'air secondaire FA" se propage, et ainsi d'adapter le déflecteur d'air 4 selon l'invention à différentes courbures de pare-brise, ou à différentes situations de conduite.

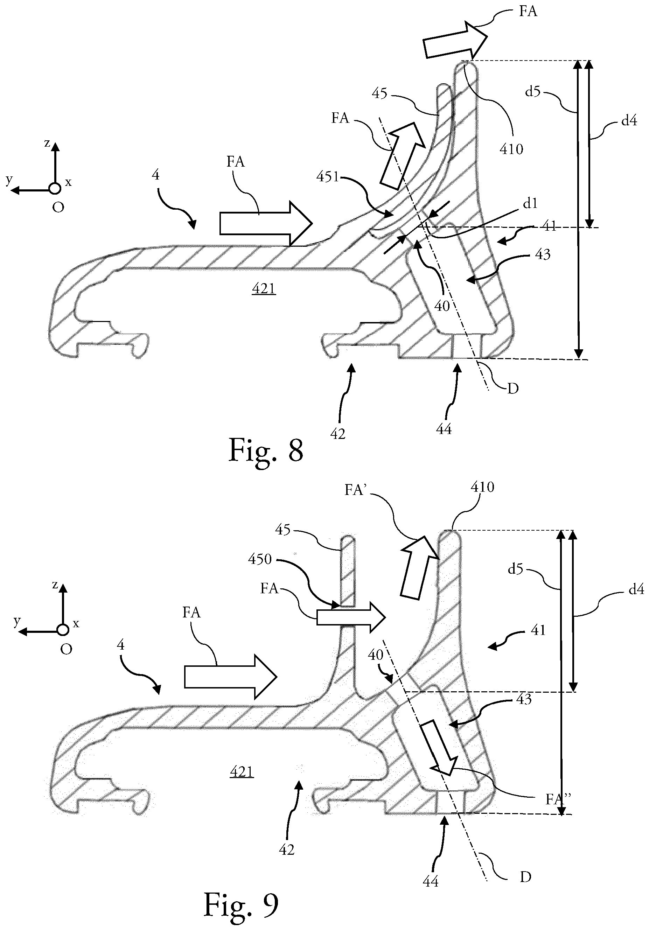

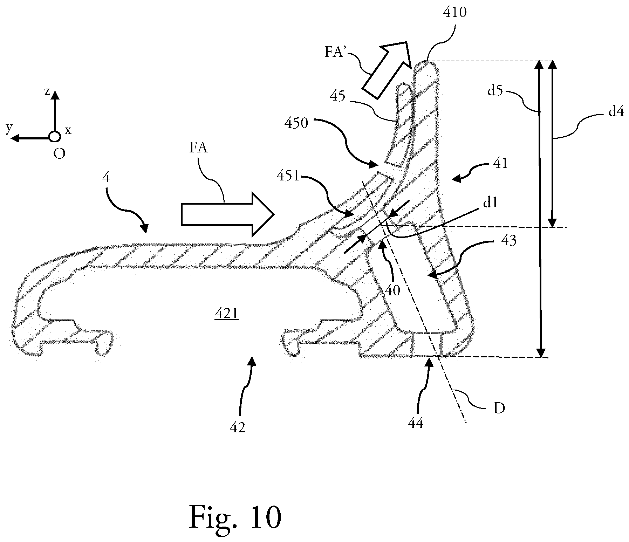

Les figures 7 à 10 illustrent quant à elles, de façon schématique, un deuxième mode de réalisation du déflecteur d'air 4 selon la présente invention, les figures 7 et 8 illustrant une première variante de ce deuxième mode de réalisation, tandis que les figures 9 et 10 illustrent une deuxième variante de ce deuxième mode de réalisation. Tel que précédemment évoqué ces figures représentent le déflecteur d'air 4 vu selon une coupe transversale.

Selon ce deuxième mode de réalisation, le déflecteur d'air 4 comprend moyen d'obturation configuré pour, alternativement, autoriser ou interdire la circulation du flux d'air secondaire FA" dans le canal 43. Selon l'exemple illustré ici, ce moyen d'obturation prend la forme d'un volet 45, par exemple issu de matière avec le déflecteur d'air 4. On entend par « issu de matière » le fait que ce volet 45 et le déflecteur d'air 4 forment un ensemble monobloc, c'est-à-dire un ensemble qui ne peut être séparé sans entrainer la détérioration du déflecteur d'air 4 ou du volet 45. Ce volet 45 est ainsi configuré pour prendre une première position, illustrée sur les figures 7 et 9, dans laquelle il s'étend selon une direction parallèle ou sensiblement parallèle à la première partie 41 du déflecteur d'air 4 et une deuxième position, illustrée sur les figures 8 et 10, dans laquelle il vient en appui contre cette première partie 41 du déflecteur d'air 4 de sorte à obturer la première ouverture 40 ménagée dans cette première partie 40 du déflecteur d'air 4. On entend par « obturer la première ouverture 40 » le fait que lorsque le volet 45 est dans sa deuxième position, aucun flux d'air ne peut rejoindre le canal 43. Autrement dit, ce volet 45 comprend au moins une portion pleine 451 qui présente une dimension au moins équivalente à la section d1 de la première ouverture 40.

Alternativement, on pourra prévoir que le moyen d'obturation soit configuré pour obturer la deuxième ouverture du canal.

Ce volet 45 est réalisé dans un matériau déformable qui lui permet de prendre alternativement l'une ou l'autre de ces positions. Avantageusement, ce volet 45 permet ainsi de gérer de manière autonome le compromis entre les deux fonctions du déflecteur d'air 4 selon l'invention, à savoir sa fonction de transformation de la pression appliquée par le flux d'air principal FA en une force d'appui et sa fonction permettant de former le flux d'air secondaire FA" configuré pour souffler l'eau et/ou le liquide lave-glace accumulé entre le balai d'essuyage et le montant du pare-brise de sorte à limiter le phénomène d'aspiration décrit ci-dessus. Selon l'invention, le volet 45 est configuré pour prendre sa première position lorsque le véhicule roule à faible vitesse et pour prendre sa deuxième position lorsque ce véhicule roule à une vitesse élevée, par exemple une vitesse supérieure à 120 km/h. Avantageusement, le volet 45 est configuré pour prendre sa première position lorsque le véhicule roule à une vitesse comprise entre 80km/h et 120km/h et pour prendre sa deuxième position lorsque le véhicule roule à une vitesse supérieure à 120km/h. En effet, à vitesse élevée, c'est-à-dire lorsque le véhicule se déplace à plus de 120km/h, la vitesse du flux d'air qui circule sur la zone située entre la position extrême du balai d'essuyage et le montant du pare-brise est suffisante pour entrainer l'eau et/ou le liquide lave-glace vers le haut du pare-brise, de sorte que l'effet d'évacuation de ces liquides accumulés procuré par le déflecteur d'air n'est plus nécessaire. De plus, en obturant la première ouverture, la totalité du flux d'air principal FA circulant sur le pare-brise peut être déviée de sorte à augmenter la force d'appui du balai d'essuyage sur ce pare-brise.

Selon la première variante du deuxième mode de réalisation illustrée sur ces figures 7 et 8, lorsque le volet 45 est dans sa première position comme illustré à la figure 7, le flux d'air principal FA contourne le volet 45 avant de se séparer en le flux d'air primaire FA' et en le flux d'air secondaire FA" configuré pour rejoindre le canal 43. Lorsque le volet 45 est dans sa deuxième position comme montré à la figure 8, le flux d'air primaire FA' dont la pression est transformée en la force d'appui du balai contre le pare-brise, est formé par la totalité, ou la quasi-totalité du flux d'air principal FA circulant sur la deuxième partie 42 du déflecteur d'air 4. On constate que le volet 45 fléchit sous la pression exercée par le flux d'air principal FA et vient se plaquer contre la première partie 41 du déflecteur d'air 4, notamment en épousant la forme concave de celui-ci. C'est ainsi que l'accès au canal 43 est fermé.

Selon la deuxième variante du deuxième mode de réalisation de la présente invention illustrée sur les figures 9 et 10, un trou 450 est ménagé dans ce volet 45. Tel qu'illustré, ce trou 450 est traversant, de sorte que le flux d'air principal FA est apte à traverser ce volet 45. Tel qu'illustré sur la figure 9, lorsque le volet 45 est dans sa première position, le flux d'air principal FA traverse le trou 450 avant de se diviser en le flux d'air primaire FA' et en le flux d'air secondaire FA" tel que précédemment décrit. Sur la figure 10, ce volet 45 est représenté dans sa deuxième position. Tel qu'illustré, on remarque que, dans cette deuxième position, le volet 45 obture la première ouverture 40 et que le trou 450 ménagé dans ce volet 45 est obturé par la première partie 41 du déflecteur d'air 4. Autrement dit, ce trou 450 est ménagé de sorte que, tel que précédemment évoqué, le volet 45 comprenne la portion pleine 451 configurée pour obturer totalement la première ouverture 40. En d'autres termes, cette portion pleine 451 présente une dimension au moins équivalente à la section d1 de la première ouverture 40 et le trou 450 est ménagé en dehors de cette portion pleine 451 du volet 45. Plus précisément, cette portion pleine 451 est ménagée de sorte qu'elle vienne en regard de la première ouverture 40 lorsque le volet 45 est dans sa deuxième position, de sorte que la circulation du flux d'air secondaire FA" dans le canal 43 ne soit pas possible. Tel que précédemment, lorsque ce volet 45 est dans sa deuxième position, le flux d'air primaire FA' dont la pression est transformée en la force d'appui du balai contre le pare-brise est formé par la totalité, ou la quasi-totalité du flux d'air principal FA circulant sur ce pare-brise.

La présente invention propose ainsi un moyen simple et peu coûteux permettant d'au moins réduire le phénomène d'aspiration qui peut avoir lieu lors des phases descendantes du balai d'essuyage et qui peut résulter en une altération de la visibilité du conducteur. L'invention atteint son objectif en proposant un déflecteur d'air qui est configuré pour repousser ou éloigner un liquide du balai d'essuyage qui comporte un tel déflecteur d'air.

La présente invention ne saurait toutefois se limiter aux moyens et configurations décrits et illustrés ici. En particulier la forme, la disposition, la taille et le nombre de premières ouvertures et de deuxièmes ouvertures peuvent être modifiés sans nuire à l'invention à condition qu'ils remplissent les fonctionnalités décrites dans le présent document.

## Revendications

1. Déflecteur d'air (4) pour un balai d'essuyage (1) configuré pour essuyer une surface vitrée (11) d'un véhicule, le déflecteur d'air (4) s'étendant majoritairement selon un axe longitudinal (X) et comprenant au moins une première partie (41) qui émerge d'une deuxième partie (42), la première partie (41) comprenant une arête libre (410), le déflecteur d'air (4) comprenant au moins un canal (43) configuré pour être emprunté par au moins un flux d'air secondaire (FA") issu d'un flux d'air principal (FA) circulant le long de la deuxième partie (42), le déflecteur d'air (4) comprenant au moins une première ouverture (40) par laquelle le flux d'air secondaire (FA") est apte à rejoindre le canal (43) et le déflecteur d'air (4) comprenant au moins une deuxième ouverture (44) par laquelle le flux d'air secondaire (FA") est apte à quitter le canal (43), une première distance (d4) mesurée entre un point de l'arête libre (410) et la première ouverture (40) étant inférieure à une deuxième distance (d5) mesurée entre le même point de l'arête libre (410) et la deuxième ouverture (44), la première distance (d4) et la deuxième distance (d5) étant mesurées dans un même plan transversal à l'axe longitudinal (X), la première ouverture (40) étant ménagée dans la première partie (41) du déflecteur d'air (4) et la deuxième ouverture (44) étant ménagée dans la deuxième partie (42) du déflecteur d'air (4), le déflecteur étant **caractérisé en ce que** la première ouverture (40) et la deuxième ouverture (44) du canal (43) sont décalées l'une par rapport à l'autre le long de l'axe longitudinal (X).

2. Déflecteur d'air (4) selon la revendication précédente, dans lequel au moins une portion du canal (43) s'étend parallèlement à l'axe longitudinal (X).

3. Déflecteur d'air (4) selon l'une quelconque des revendications précédentes, dans laquelle la première ouverture (40) présente une section (d1) supérieure à une section (d2) de la deuxième ouverture (44).

4. Déflecteur d'air (4) selon l'une quelconque des revendications 1 ou 2, dans lequel la première ouverture (40) présente une section (d1) inférieure à une section (d2) de la deuxième ouverture (44).

5. Déflecteur d'air (4) selon l'une quelconque des revendications précédentes, dans lequel le déflecteur d'air (4) comprend un volet (45) configuré pour obturer au moins la première ouverture (40).

6. Déflecteur d'air (4) selon la revendication précédente, dans lequel le volet (45) comprend au moins une portion pleine (451) configurée pour obturer la première ouverture (40).

7. Déflecteur d'air (4) selon la revendication précédente, dans lequel un trou (450) traversant est ménagé dans le volet (45), ce trou (450) étant configuré pour autoriser le passage du flux d'air principal (FA).

8. Balai d'essuyage (1) pour véhicule automobile comprenant au moins une lame d'essuyage (5) destinée à venir en appui sur une surface vitrée (11), au moins un organe de flexion (6) configuré pour générer une courbure du balai d'essuyage (1), au moins un déflecteur d'air (4) selon l'une quelconque des revendications précédentes, et au moins un support (14) porteur de l'organe de flexion (6), de la lame d'essuyage (5) et du déflecteur d'air (4).

## Patentansprüche

1. Luftleitvorrichtung (4) für einen Wischer (1), der zum Wischen einer Scheibenfläche (11) eines Fahrzeugs ausgestaltet ist, wobei sich die Luftleitvorrichtung (4) hauptsächlich entlang einer Längsachse (X) erstreckt und mindestens einen ersten Teil (41) umfasst, der aus einem zweiten Teil (42) hervorgeht, wobei der erste Teil (41) eine freie Kante (410) umfasst, wobei die Luftleitvorrichtung (4) mindestens einen Kanal (43) umfasst, der dazu ausgestaltet ist, von mindestens einem aus einem entlang des zweiten Teils (42) zirkulierenden Hauptluftstrom (FA) hervorgehenden Nebenluftstrom (FA") beaufschlagt zu werden, wobei die Luftleitvorrichtung (4) mindestens eine erste Öffnung (40) umfasst, über die der Nebenluftstrom (FA") in den Kanal (43) strömen kann, und wobei die Luftleitvorrichtung (4) mindestens eine zweite Öffnung (44) umfasst, über die der Nebenluftstrom (FA") den Kanal (43) verlassen kann, wobei ein zwischen einem Punkt der freien Kante (410) und der ersten Öffnung (40) gemessener erster Abstand (d4) kleiner als ein zwischen demselben Punkt der freien Kante (410) und der zweiten Öffnung (44) gemessener zweiter Abstand (d5) ist, wobei der erste Abstand (d4) und der zweite Abstand (d5) in derselben quer zu der Längsachse (X) verlaufenden Ebene gemessen werden, wobei die erste Öffnung (40) im ersten Teil (41) der Luftleitvorrichtung (4) ausgeführt ist und die zweite Öffnung (44) im zweiten Teil (42) der Luftleitvorrichtung (4) ausgeführt ist,
**dadurch gekennzeichnet, dass**
die erste Öffnung (40) und die zweite Öffnung (44) des Kanals (43) entlang der Längsachse (X) zueinander versetzt sind.

2. Luftleitvorrichtung (4) nach dem vorhergehenden Anspruch, wobei sich mindestens ein Abschnitt des Kanals (43) parallel zu der Längsachse (X) erstreckt.

3. Luftleitvorrichtung (4) nach einem der vorhergehenden Ansprüche, wobei die erste Öffnung (40) einen Querschnitt (d1) aufweist, der größer als ein Querschnitt (d2) der zweiten Öffnung (44) ist.

4. Luftleitvorrichtung (4) nach einem der Ansprüche 1 oder 2, wobei die erste Öffnung (40) einen Querschnitt (d1) aufweist, der kleiner als ein Querschnitt (d2) der zweiten Öffnung (44) ist.

5. Luftleitvorrichtung (4) nach einem der vorhergehenden Ansprüche, wobei die Luftleitvorrichtung (4) eine Klappe (45) umfasst, die zum Verschließen mindestens der ersten Öffnung (40) ausgestaltet ist.

6. Luftleitvorrichtung (4) nach dem vorhergehenden Anspruch, wobei die Klappe (45) mindestens einen massiven Abschnitt (451) umfasst, der zum Verschließen der ersten Öffnung (40) ausgestaltet ist.

7. Luftleitvorrichtung (4) nach dem vorhergehenden Anspruch, wobei in der Klappe (45) ein Durchgangsloch (450) ausgeführt ist, wobei dieses Loch (450) dazu ausgestaltet ist, den Durchgang des Hauptluftstroms (FA) zu gestatten.

8. Wischer (1) für ein Kraftfahrzeug, umfassend mindestens ein Wischblatt (5), das dazu bestimmt ist, an einer Scheibenfläche (11) zur Anlage zu kommen, mindestens ein Biegeglied (6), das dazu ausgestaltet ist, eine Krümmung des Wischers (1) zu erzeugen, mindestens eine Luftleitvorrichtung (4) nach einem der vorhergehenden Ansprüche und mindestens eine Stütze (14) zum Tragen des Biegeglieds (6), des Wischblatts (5) und der Luftleitvorrichtung (4).

## Claims

1. Air deflector (4) for a wiper blade (1) configured to wipe a glazed surface (11) of a vehicle, the air deflector (4) extending predominantly along a longitudinal axis (X) and comprising at least a first part (41) which emerges from a second part (42), the first part (41) comprising a free edge (410), the air deflector (4) comprising at least one channel (43) configured to be followed by at least a secondary air flow (FA") derived from a main air flow (FA) flowing along the second part (42), the air deflector (4) comprising at least a first opening (40) via which the secondary air flow (FA") is able to reach the channel (43) and the air deflector (4) comprising at least a second opening (44) via which the secondary air flow (FA") is able to leave the channel (43), a first distance (D4) measured between a point on the free edge (410) and the first opening (40) being less than a second distance (D5) measured between the same point on the free edge (410) and the second opening (44), the first distance (D4) and the second distance (D5) being measured in the one same plane transverse to the longitudinal axis (X), the first opening (40) being created in the first part (41) of the air deflector (4), and the second opening (44) being created in the second part (42) of the air deflector (4), the deflector being **characterized in that** the first opening (40) and the second opening (44) of the channel (43) are offset relative to one another along the longitudinal axis (X).

2. Air deflector (4) according to the preceding claim, wherein at least a portion of the channel (43) runs parallel to the longitudinal axis (X).

3. Air deflector (4) according to either one of the preceding claims, wherein the first opening (40) has a cross section (D1) that is greater than a cross section (D2) of the second opening (44).

4. Air deflector (4) according to either one of Claims 1 and 2, wherein the first opening (40) has a cross section (D1) that is smaller than a cross section (D2) of the second opening (44).

5. Air deflector (4) according to any one of the preceding claims, wherein the air deflector (4) comprises a flap (45) configured to block off at least the first opening (40).

6. Air deflector (4) according to the preceding claim, wherein the flap (45) comprises at least one solid portion (451) configured to block off the first opening (40) .

7. Air deflector (4) according to the preceding claim, wherein a through-hole (450) is created in the flap (45), this hole (450) being configured to allow the main air flow (FA) to pass.

8. Wiper blade (1) for a motor vehicle comprising at least one blade rubber (5) intended to press against a glazed surface (11), at least one flex-rail member (6) configured to generate curvature in the wiper blade (1), at least one air deflector (4) according to any one of the preceding claims, and at least one support (14) bearing the flex-rail member (6), the blade rubber (5) and the air deflector (4).
